Europäisches Patentamt

European Patent Office

Office européen des brevets

(11) Publication number: **0 060 549**
**A1**

## EUROPEAN PATENT APPLICATION

(21) Application number: **82102095.5**

(22) Date of filing: **15.03.82**

(51) Int. Cl.³: **F 16 L 15/00**

(30) Priority: **16.03.81 US 244176**

(43) Date of publication of application: **22.09.82**
Bulletin **82/38**

(84) Designated Contracting States: **AT DE FR GB IT NL**

(71) Applicant: **FMC CORPORATION, 200 E. Randolph Drive, Chicago Illinois 60601 (US)**

(72) Inventor: **Leicht, Fred Marion, 12515 Huntington Field, Houston Texas 77099 (US)**
Inventor: **Williams, Michael Raye, 15419 Misty Forest Court, Houston Texas 77068 (US)**
Inventor: **Tse, Larry Wingfai, 770 Greens Road Apt. 220, Houston Texas 77060 (US)**
Inventor: **Masciopinto, Anthony John, 710 St. Andrews Road, Humble Texas 77338 (US)**
Inventor: **Ames, Thomas Joseph, 12103 Advance Drive, Houston Texas 77065 (US)**
Inventor: **Berry, Robert Frank, 11715 Fawnview Drive, Houston Texas 77070 (US)**
Inventor: **Milberger, Lionel John, 8911 Rocky Lane, Houston Texas 77040 (US)**

(74) Representative: **Bardehle, Heinz, Dipl.-Ing., Herrnstrasse 15 Postfach 260251, D-8000 München 26 (DE)**

(54) **Thread-type pipe connector.**

(57) An improved thread-type pipe connector especially suitable for releasably interconnecting sections of marine riser pipe, comprising a sleeve-type coupling element (1), a differential thread system (1a, 1b) for threaded engaging the coupling element (1) with two pipe sections (2, 3) in an end-to-end orientation, and a system of keys, fingers or lugs (4) and cooperating slots, grooves or pockets (5) that releasably interlock the two pipe sections in a manner that prevents their relative rotation in either a clockwise or counter-clockwise direction.

UNCONNECTED

CONNECTED & PRELOADED

ACTORUM AG

## THREAD-TYPE PIPE CONNECTOR

This invention relates to pipe connectors, and more particularly to thread-type connectors for releasably interconnecting sections of a marine riser or other pipe assembly extending between a subsea oil or gas well and a location at or near the water surface.

Various types of connector devices or systems have been and are presently used for securing two pipe sections together in end-to-end relationship. Perhaps the most common is a union nut connector that comprises an internally threaded sleeve-like nut rotatably surrounding one of the pipe section ends and secured thereto by means of a shoulder on the pipe end, and a threaded fitting on the opposing end of the other pipe section onto which the nut is screwed to releasably secure the two pipe sections together in abutting manner. Although this type of pipe connector generally functions satisfactorily, because of the forces exerted between the nut and the shoulder of the first pipe section and the threaded connection between the nut and the end of the second pipe section, a high stress level is created at the point of contact between the nut and the pipe shoulder. This stress level very often significantly shortens the fatigue life of the connector, thereby giving riser to potential early failure.

Additional problems are encountered when the heretofore known connectors are employed in the petroleum industry to interconnect sections of marine risers well tool running strings, and other subsea and downhole pipe assemblies that require right-hand torque for installation and left-hand torque for retrieval. In order to facilitate rotation of these pipe assemblies in either direction without disconnecting their sections, the pipe coupling of each joint often is welded to the two pipe sections onto which it has been threaded, or a strap is welded across the joint to prevent unthreading. These solutions, however, create another problem in that the welds must be removed in order to disconnect the assembly at the joints, a procedure which is time consuming and often results in destruction of the joint.

The present invention overcomes the foregoing problems by providing a thread-type pipe connector with a differential or compound thread system between the sleeve-like coupling element and the ends of the two pipe sections onto which the coupling is threaded, and with an anti-rotation system that interlocks the two pipe section ends and prevents their relative rotation in either direction.

The thread system of the present invention can be of the differential type, that is, two or more threads of different pitches, and it also can be of the compound type, that is a combination of right and left-hand threads, such as where the two pipe sections ends, one having right-hand threads and the other left-hand threads, are interconnected by a union nut or coupling element having right-hand threads at one end and left-hand at the other. Further, the threads can be of single or multiple start design. By virtue of this invention the load impressed on the pipe sections is distributed along the threads instead of on a pipe section shoulder, thereby resulting in a stress level that is significantly lower than that encountered with other types of connectors, thereby, increasing the fatigue life of the connector.

The anti-rotation system of the present invention can comprise a plurality of keys, fingers, lugs, or other such elements that cooperatively engage grooves, slots, pockets, or the like in the other pipe section, whereby, relative rotation of the pipe sections cannot occur in either direction while the sections are sufficiently engaged so that this system is functional. The differential or compound threaded pipe coupling element also cooperates with the anti-rotation system to retain the pipe sections in that functional engagement, while providing a quick, easy and otherwise efficient means of releasing the connector between the sections when such is desired.

In order that the connection of the two pipe sections by means of the present invention is fluid tight, the invention also contemplates the use of any of a variety of sealing systems between the pipe sections including for example, a separate seal element that engages each pipe section and that is removably retained in one of the pipe sections so that accidental loss or destruction of the seal element cannot occur during handling. The seal element can be exclusively metallic in composition, or can include resilient sealing means if desired.

Figures 1 and 2 are fragmentary longitudinal sectional views of one embodiment of the present invention, illustrating a connector with the combination of a differential thread system and a key and slot anti-rotation system.

Figures 3 thru 5 are longitudinal sectional views of another embodiment of the present invention, herein incorporated in a composite marine riser pipe assembly.

Figures 6 thru 8 are views like Figures 3 thru 5, showing another manner of employing the present invention in a composite marine riser.

Figure 9 is a fragmentary longitudinal sectional view of a modified version of the embodiment of Figures 6 thru 8.

Figures 10 and 11 illustrate another embodiment of the present invention wherein interlocking fingers and slots are employed as the anti-rotation system.

Figures 12 and 13 illustrate yet another embodiment of the present invention similar to that of Figures 10 and 11, but which includes a separate seal element.

Figures 14 and 15 illustrate an embodiment of the present invention very like that of Figures 12 and 13, but wherein the seal element includes resilient sealing rings in its outer periphery.

Figures 16 and 17 illustrate yet another embodiment of the present invention including an annular seal element and a plurality of anti-rotation wedge elements interlocking the pipe sections.

-4-

Figures 18 thru 21 illustrate related embodiment of the present invention wherein a plurality of pins are employed to interlock the pipe sections in their connected position.

Figures 22 and 23 illustrate a further embodiment of the present invention in which the opposed pipe section ends are skew-cut to provide an anti-rotation interlock.

Figures 25 and 26 illustrate still further embodiment of the present invention, showing the employment of a double cone-shaped seal system between the pipe sections.

Figures 27, 28, and 29 illustrate additional embodiment of the present invention wherein fingers of an annular seal element cooperate with pockets in the pipe sections to interlock the sections against relative rotation.

Figures 30 and 31 illustrate an embodiment of the present invention similar to that of Figures 12 and 13, but wherein the seal element is retained in one pipe section by a lip and groove arrangement.

Figures 32 and 33 illustrate an embodiment of the present invention similar to that of Figure 25. Figures 34, 35, 36, and 37 illustrate additional embodiments of the present invention similar to that of Figures 30 and 31.

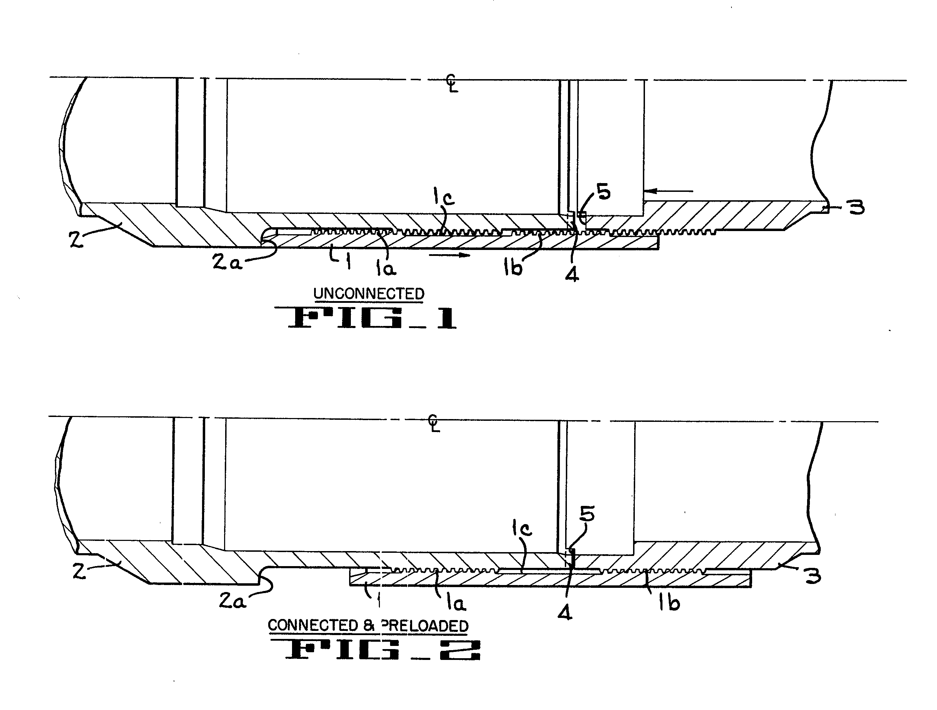

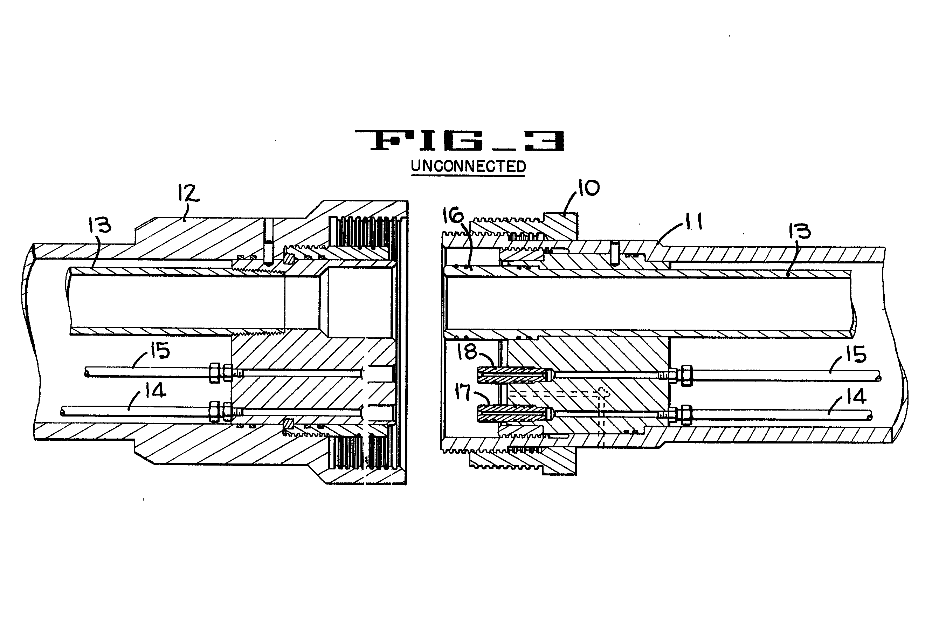

With reference to the various figures of the drawing, Figures 1 and 2 illustrate an embodiment of the present invention wherein a sleeve-like pipe coupling 1, having internal threads 1a, 1b of two different pitches, i.e., fine (slow) and coarse (fast), respectively, separated by a relieved area 1c, is employed to connect the ends of tow pipe sections or nipples 2, 3. The pipe section 2 has external threads that correspond to the coupling threads 1a, and an outer annular shoulder 2a that functions as a stop for the coupling. The pipe section 3 likewise has external threads that mate with the coupling threads 1b. The pipe section 2 also has one or more alignment keys 4 (only one shown) circumferentially on its lead end, and the lead end of the pipe section 3 has corresponding alignment slots 5 (only one shown) that accept these keys to prevent relative rotation between the pipe sections when the keys and slots are engaged. To use the connector of Figures 1 and 2, the coupling 1 is threaded first onto the pipe section 2 until the coupling bottoms on the shoulder 2a (Figure 1). The pipe sections 2 and 3 are aligned, and the pipe section 3 then inserted into the coupling 1 until its first thread engages the coupling threads 1b (Figure 1). The coupling 1 is then rotated with respect to the pipe section 2 in the opposite direction, i.e. away from the shoulder 2a, thus threading it onto the pipe section 3. During this rotation the pipe section 3 is drawn towards the pipe section 2 until the keys and slots engage (Figure 2), preventing relative rotation between the pipe sections. From that point, the coupling 1 is torqued to tighten the connection and to preload the threads 1a, 1b, and those of the coupling. Since threads with adequate length have been shown to have less stress levels than a shoulder and thread, the dual threaded connector system of this invention has definite advantages over previously known connectors. This differential thread connector provides an opportunity to use a coarser thread and still obtain the mechanical advantage of a finer thread. Short relative movement is all that is required for engagement of the two pipe sections neither of which has to be rotated. Additional advantages include fast make-up, minimum number of parts, simple operation, minimum outside diameter, longer fatigue life, and the ability to transmit torsional loads thru the connector in either direction (CW or CWW) without accidentally disengaging the connector.

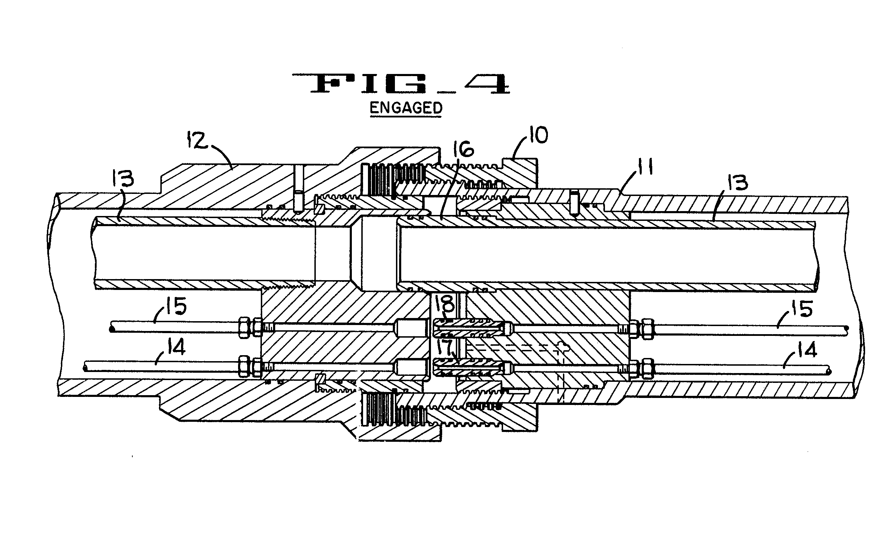

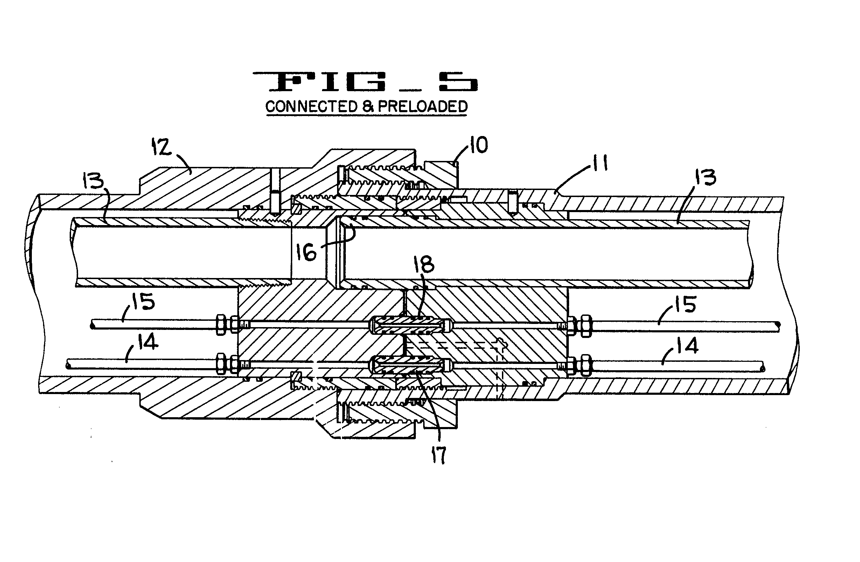

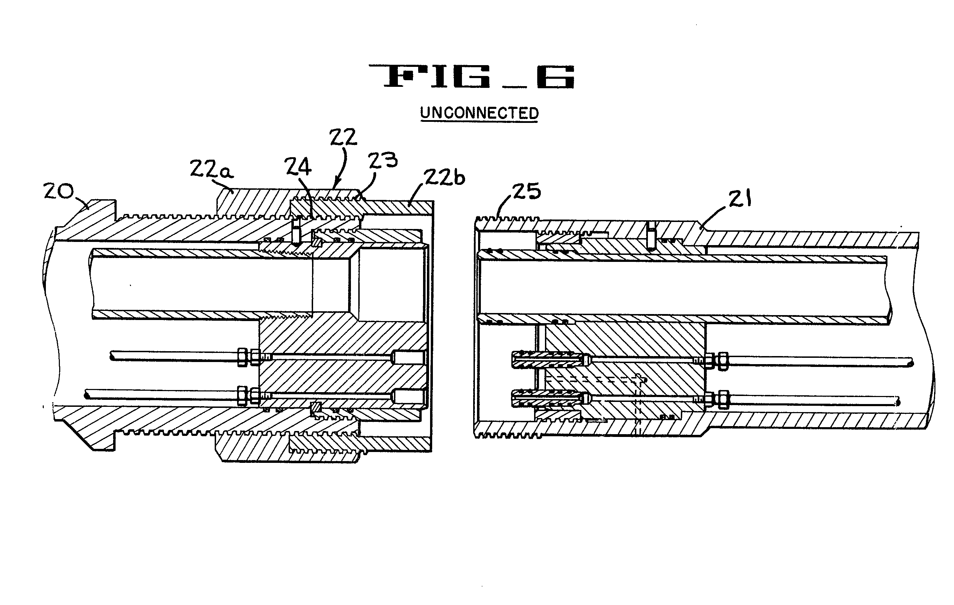

Figures 3, 4, and 5 illustrate another embodiment of the present invention wherein a nut 10 is used to connect two sections 11, 12 of a typical workover riser for an underwater well. This riser contains a tubing string 13, two hydraulic lines 14, 14, and the components of the string and lines are interconnected in a fluid-tight manner by stabs 16, 17, 18, respectively, when the riser sections 11, 12 are fully connected as shown in Figure 5. Either differential threads or a right-hand - left-hand thread combination can be

-6-

employed on the nut 10, as desired, so that by merely rotating the nut the two riser sections 11, 12 are interconnected.

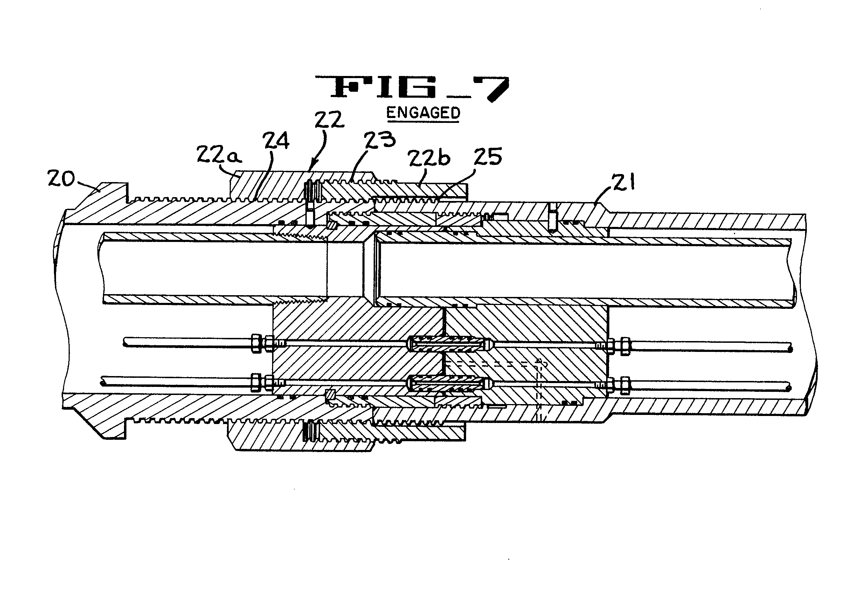

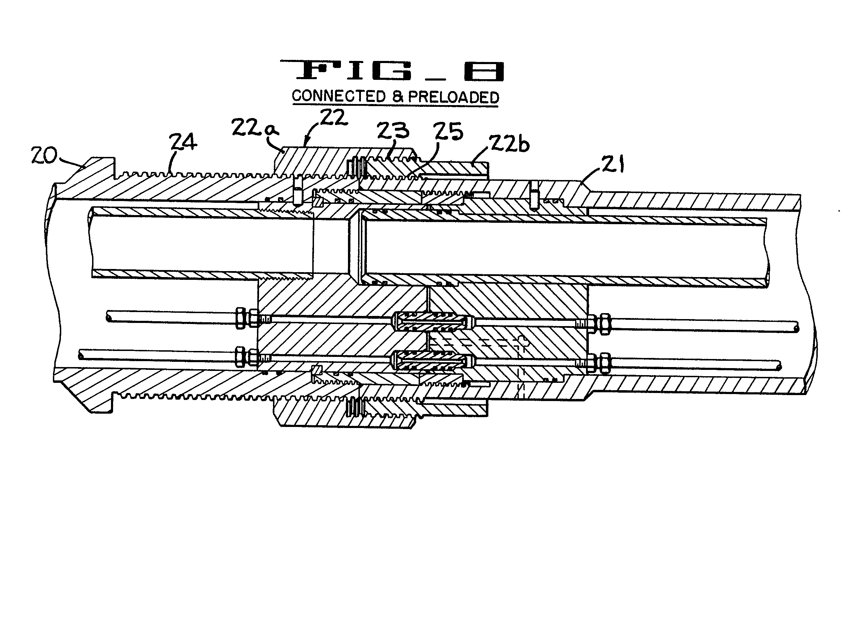

Figures 6, 7, and 8 illustrate yet another embodiment of the present invention wherein three threads are used to connect two riser sections 20, 21 together. In this embodiment a two-element nut 22, comprising outer element 22a and inner element 22b, is threaded onto the riser section 20 into the relative position shown in Figure 6, prior to stabbing the sections 20, 21 together into their engaged position shown in Figure 7. The threads 23 between the inner and outer nut elements, and the threads 24 on the riser section 20 can be of different pitches, i.e., a differential system, or of a right-hand left-hand relationship, as desired. In either case, the threads 25 on the riser section 21 are, of course, the same as those at 24 on the riser section 20. Once the riser sections have been stabbed together into the Figure 7 position, the nut assembly 22 is threaded onto the riser section 21 to the position shown in Figure 8, and the nut elements 22a, 22b, are then rotated with respect to each other to establish the desired preload on the threads. An advantage of this connector is that it can be stabbed together completely before the threads 24 on the nut element 22b engage the threads 25 on the riser section 21, thereby helping to prevent undesirable cross-threading or galling of the threads.

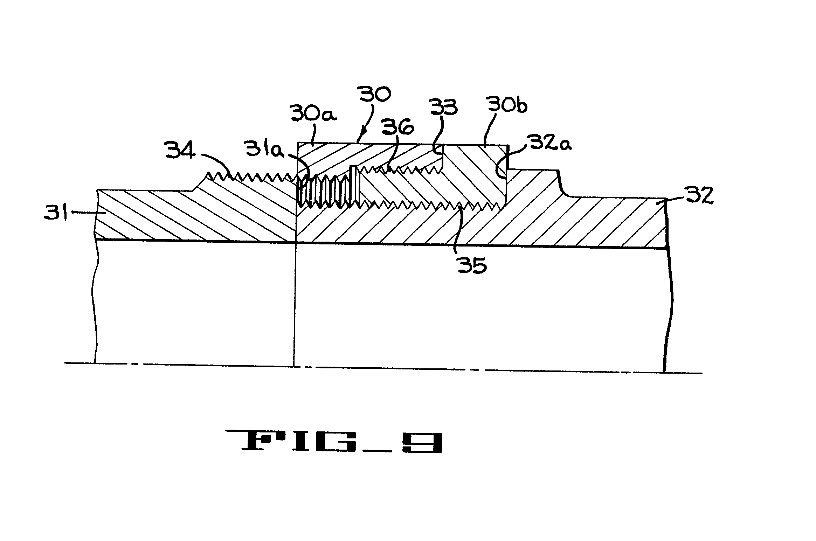

Figure 9 illustrates a modified version of the Figures 6 thru 8 embodiment of this invention, wherein the two element nut 30 includes a shoulder 33 on its inner element 30b, and the riser sections 31, 32, have shoulders 31a, 32a, respectively, to insure correct "start" and "finish" positions of the connector components during engagement and disengagement. Threads 34 and 35 of this connector are of equal pitch, while the threads 36 that secure the two nut elements 30a, 30b, together are of a different pitch, so that a differential thread system exists between the threads 36 and those at 34 and 35. Accordingly, to make-up the connection the nut inner element 30b is rotated to advance it toward the riser section 31, thereby threading outer element 30a onto the threads 34, until the inner element 30b bottoms out against the shoulder 31a, thus indicating the nut is properly centered on these threads. The outer nut element 30a is then rotated in the same direction to establish the desired preload on the threads, as measured by the amount of torque applied to achieve this rotation. To disengage the connector, the outer nut element 30a is rotated to advance it toward the riser section 32, thereby releasing the preload, and bottom it out on shoulder 33. This rotation is continued until the inner nut element 30b bottoms out on shoulder 32a, thereby indicating total disengagement of the nut from the riser section 31.

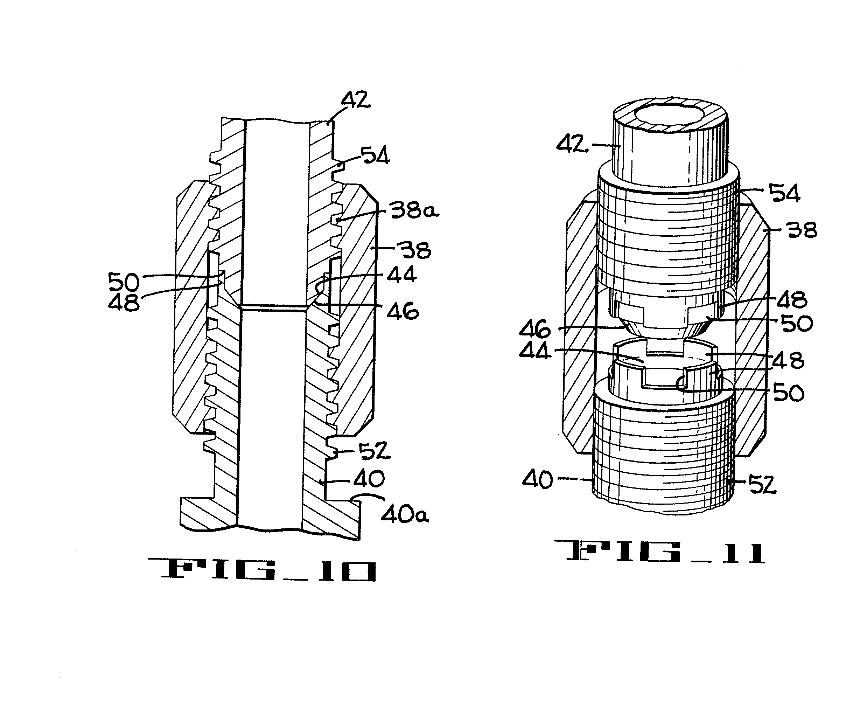

Figures 10 and 11 illustrate another embodiment of the present invention wherein pipe nipples 40 and 42 are shaped to form interlocking fingers 48 and slots 50. The nipples have differential threads 52, 54 and their ends are configured to form integral cup and cone shaped metal-to-metal sealing surfaces 44 and 46. Thus, when the nipples 40, 42, are properly connected together they form a fluid-tight conduit and the fingers 48 cooperate with the slots 50 into which they extend to prevent relative rotation between the nipples. Therefore, as the nipples are drawn together in a non-rotational manner, any foreign material on the sealing surfaces 44, 46 is scraped off by a wiping action. This prevents any grinding or other action that would destroy the sealing function of these surfaces if they were rotated relative to each other during engagement.

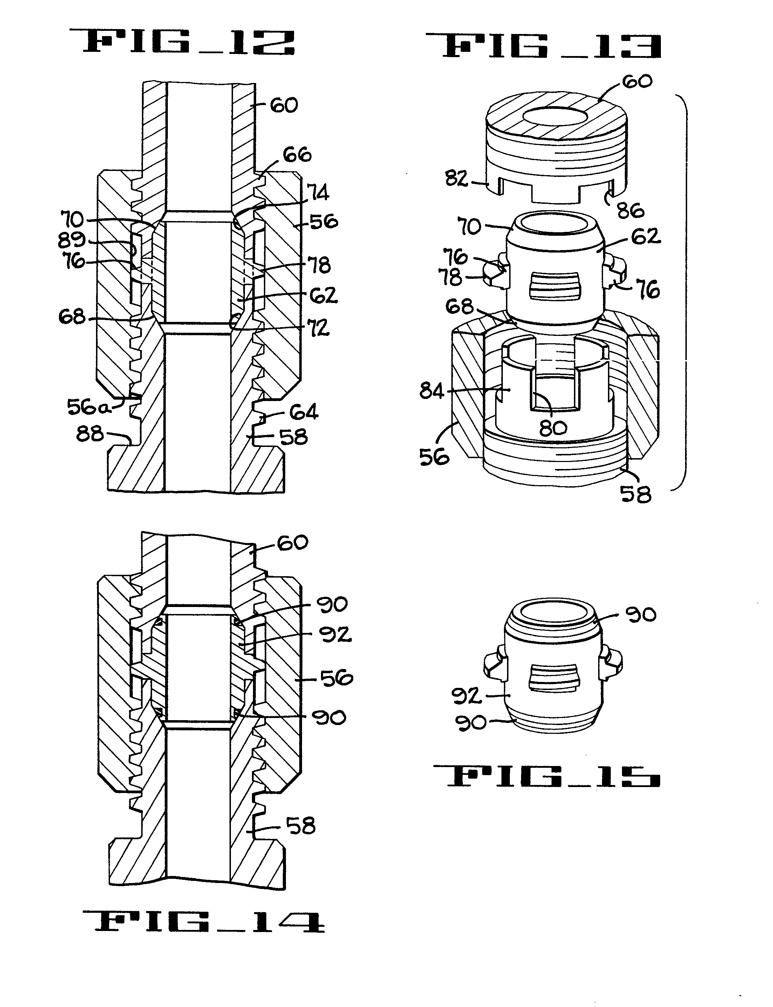

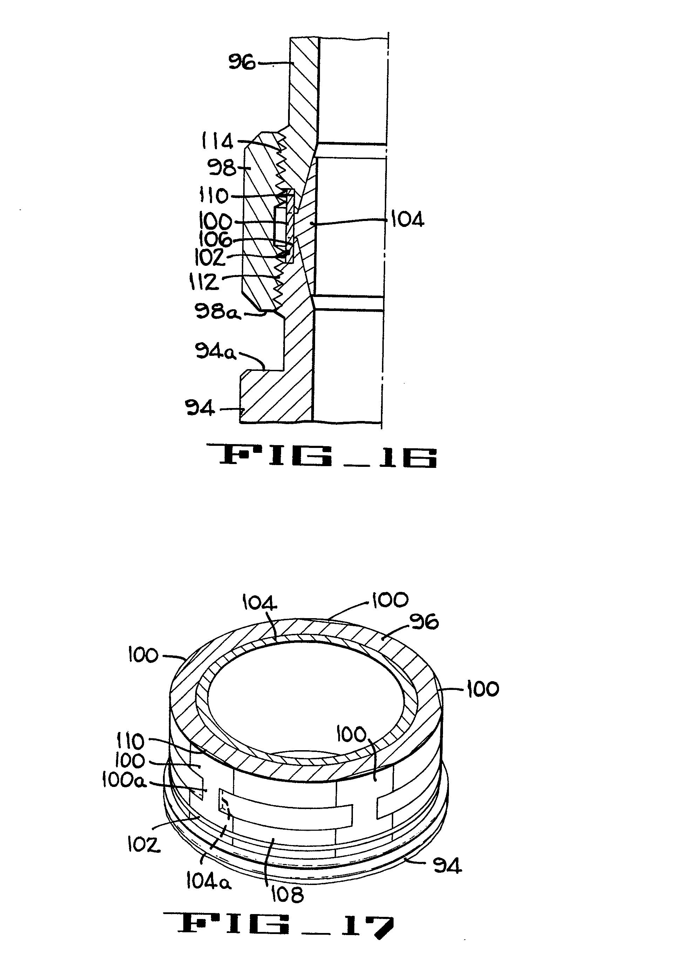

Figures 12 and 13 illustrate another embodiment of the invention, in many respects very similar to that of Figures 10 and 11. This embodiment comprises a coupling 56, pipe nipples 58 and 60 with differential threads 64 and 66, and an annular seal member 62. The cone shaped ends 68 and 70 engage the cup-shaped sealing surfaces 72, 74, of the pipe nipples 58, 60 to form a pressure-tight seal between the sealing member 62 and the nipples. In a manner similar to that of the embodiment shown in Figures 10 and 11, as the connection is made-up, any foreign material is wiped from the sealing surfaces during engagement. The seal member 62 has radially extending lugs 76 intermediate its ends, which lugs are shaped to form a helical thread 78 of the same form and pitch as thread 66. The radial lugs 76 cooperate with the slots 80 in pipe nipple 58 to prevent relative rotation between the seal member 62 with respect to nipple 58. Similarly, the fingers 82, 84, cooperate with the slots 80, 86, into which they fit, respectively, to establish an interlocking non-rotatable connection between the two pipe nipples 58, 60. To assemble this connector, the seal member 62 is inserted into pipe nipple 58 with the lugs 76 engaging the proper slots 80 such that the helical thread 78 forms a continuation of thread 66. The coupling 56 may then be threaded onto the assembled seal element 62 and pipe nipple 58 until end 56a contacts the stop shoulder 88. Since the thread 64 is of a different pitch than thread 66, the seal element 62 is now trapped in and cannot be accidentally removed from the coupling 56. Pipe nipple 60 may then be stabbed into coupling 56 and aligned so that fingers 86 extend into slots 80. The connection is completed by rotation of the coupling 56 away from the stop shoulder 88 and onto the threads 64. The differential relationship between threads 64 and 66 causes the pipe nipples 58 and 60 to be drawn together, thereby engaging the seal member 62 to establish the fluid tight connection. One possible modification of the embodiment of Figures 12 and 13 would involve making thread 78 of the same form and pitch as thread 64. In this modification, the sealing element 62 is threaded into the coupling 56 from end 56b until it enters the relieved space 86 between threads 64 and 66. The coupling 56 now containing the seal element 62, is then threaded onto pipe nipple 58, being careful to position lugs 78 with their cooperating slots 80. In this modification, the helical thread 78 need not be positioned so that it forms a continuation of either thread 64 or thread 66. The connection is then completed as described above.

Figures 14 and 15 illustrate an embodiment which is substantially identical to that of Figures 12 and 13, the difference being the inclusion of annular resilient seals 90 that reside in grooves in the conical sealing faces of seal member 92.

Figures 16 and 17 illustrate yet another embodiment of the invention, this embodiment utilizing non-integral wedge elements 100 to effect interlocking of the pipe nipples 94 and 96. The wedge elements 100 are positioned on flats 106 on nipple 94 and retained by snap ring 102 such that the current outer surfaces of wedge element 100 form a configuration of the annular outer surface 108 of nipple 94. An annular seal member 104 is retained in position in nipple 94 by the central webb portions 100a of the wedge elements 100 which engage slots 104a in the seal member 104. After the above components have been assembled as described, an annular coupling 98 is threaded onto nipple 94 until end 98a contacts stop shoulder 94a. The connection is completed by stabbing nipple 96 into the coupling 98 while aligning the flats 110 on nipple 96 with the inner flat surfaces of the projecting wedge elements 100, and then threading coupling 98 away from stop shoulder 94a and onto nipple 96. As this last threading step is carried out, the differential threads 112 and 114 cause the nipples 94, 96 to be drawn together into cooperation with seal 104 to form a fluid-tight connection. The configuration of seal element 104 produces a favorable non-rotating "wiping" action as described for the embodiment shown in Figures 10 and 11.

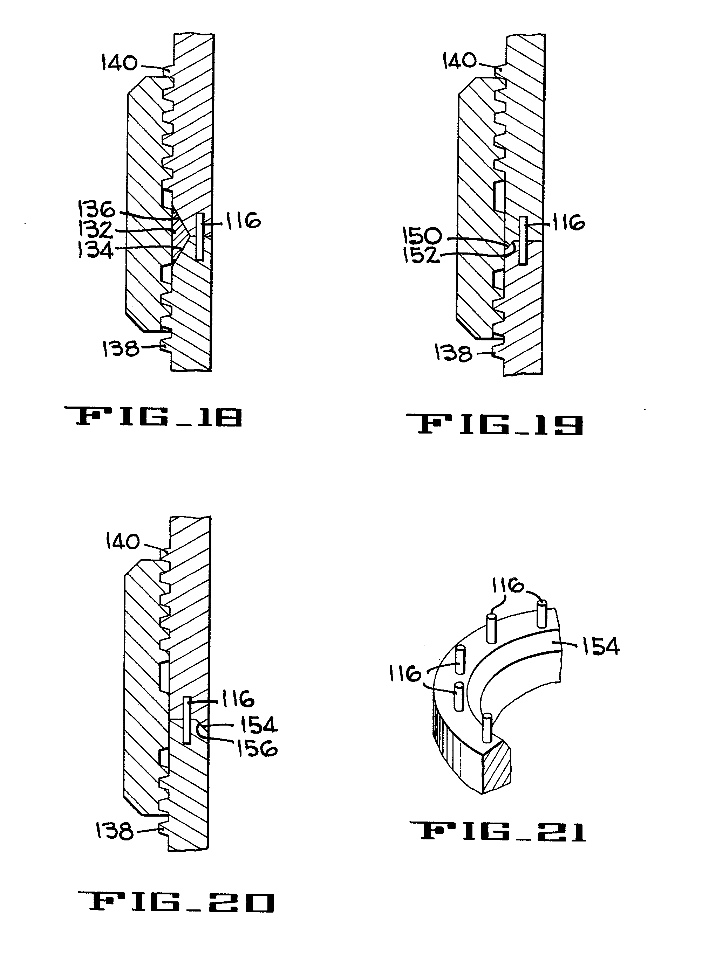

Figures 18 thru 21 illustrate related embodiment of the present invention which utilizes a plurality of circumferentially spaced pins 116 to effect the interlocking of the pipe nipples against relative rotation. Figure 18 illustrates an external seal element 132 of triangular cross section that cooperates with conical surfaces 134, 136 to establish a fluid-tight seal when this embodiment is properly assembled. As with the foregoing embodiments, differential threads 138, 140 (Figures 18-20) are employed to make-up the connection. Figure 19 illustrates an external metal-to-metal seal arrangement provided by the conical surface 150 and its complemental surface 152. In the Figure 20 embodiment, the metal-to-metal sealing surfaces 154, 156 are located on the inner portion of the nipples as distinct from their outer location on the Figure 19 embodiment. Figure 21 is a fragmented view showing the circumferentially-spaced location of pins 116.

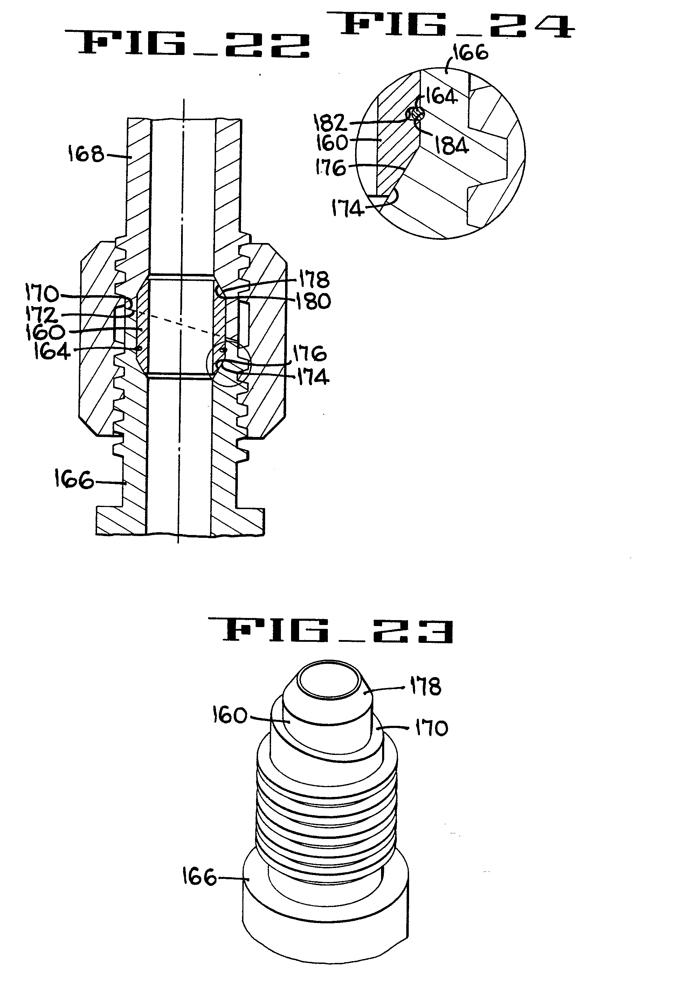

Figures 22, 23, and 24 illustrate another embodiment of the present invention in which interlocking of the two pipe nipples 166 and 168 is accomplished by the interaction of the skew-cut ends 170 and 172 of the nipples. In like manner to the embodiment of Figures 12 and 13, a seal element 160 located between the pipe nipples 164, 166 cooperates with the nipple end surfaces 176, 180 to establish a fluid-tight seal at the seal element conical surfaces 174, 178. The seal element 164 is removably retained in position within pipe nipple 166 by the snap ring 164 (Figure 24). As shown in this figure, groove 182 is sufficiently deep to allow the snap ring to contract during installation or removal of the seal element 160. The snap ring 164 is biased into its expanded condition as shown in Figure 24, so that as the seal element with the snap ring is inserted into the nipple 166, the ring will expand into groove 184, thereby securing the seal element in its proper position. As with all of the foregoing embodiments, this embodiment of Figures 22 thru 24 includes differential threads 186, 188.

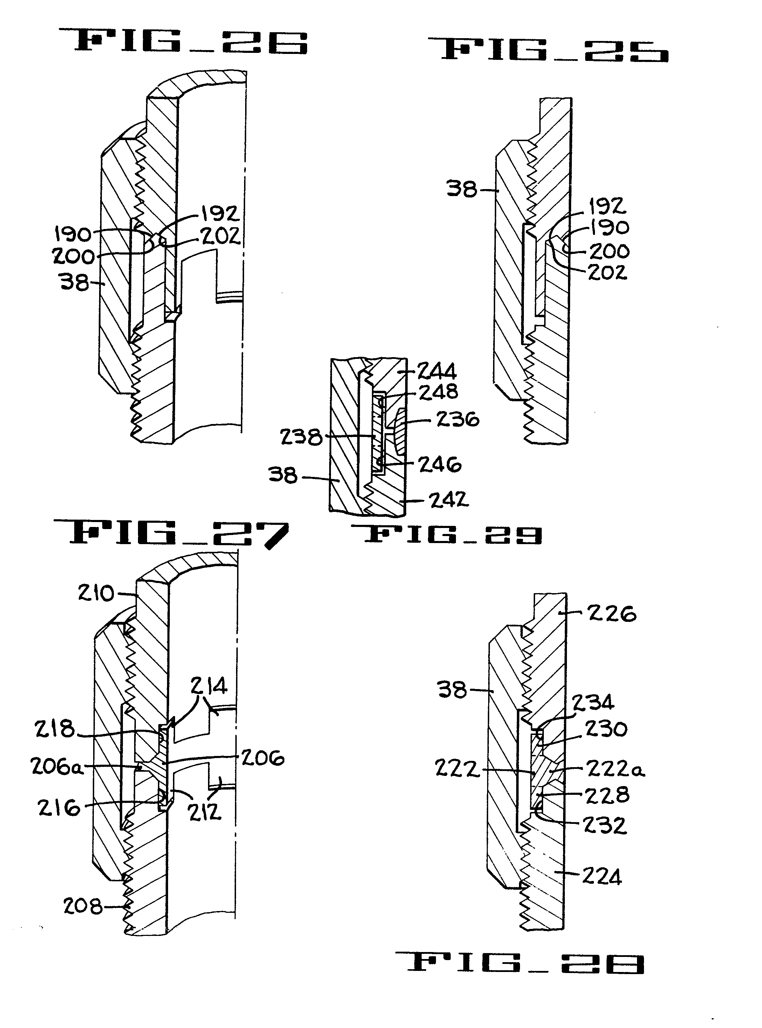

Figures 25 and 26 illustrate another embodiment of the present invention this embodiment having a double conical shaped metal-to-metal seal system which provides a fluid-tight seal between the pipe nipples. This seal system comprises a first pair of cooperating seal surfaces 190, 200, and a second pair of cooperating seal surfaces 192, 202. The embodiment of Figure 25 is substantially the same as that of Figure 10 with the exception that in Figure 25 the connector has a double conical seal system whereas that of Figure 10 includes a single conical seal system. The version shown in Figure 26 is substantially the same as that of Figure 25, the exception being that the seal members are positioned outside of the interlocking finger and slot system whereas in Figure 25 the opposite is true.

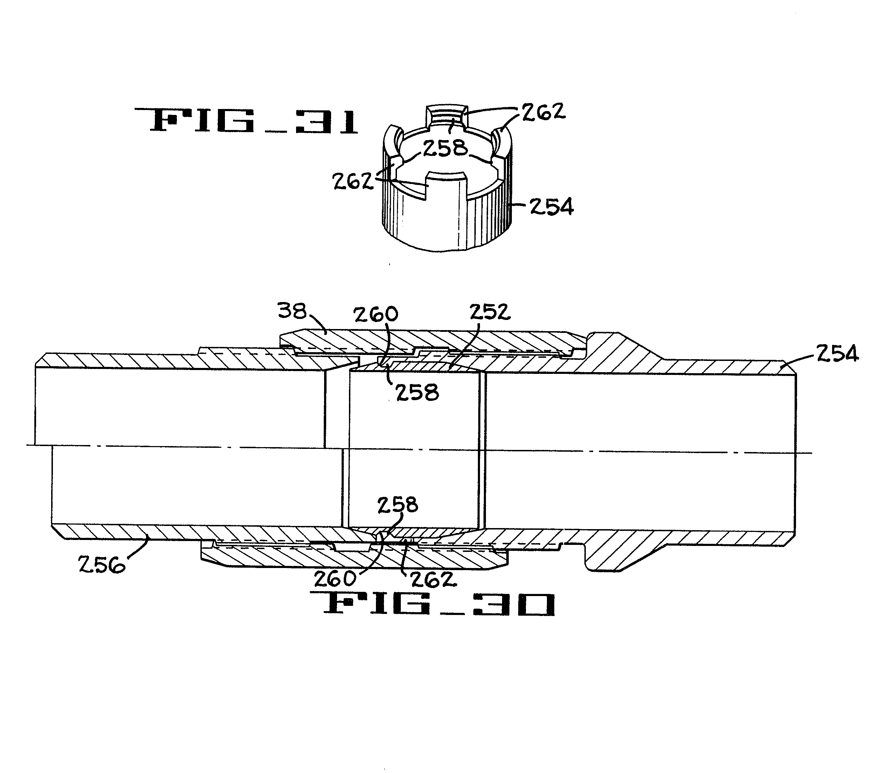

Figure 27 illustrates further embodiment of the present invention wherein fingers 212, 214, of an annular seal element 206 cooperate with pockets 216, 218 in the pipe nipples 208, 210 to effect the interlocking of the nipples and prevent their relative rotation. The annular seal ring 206 further includes a radial flange 206a that cooperates with the opposed end surfaces of the pipe nipples to establish a fluid-tight seal there between. In addition to the conical radial seal ring configuration shown in Figure 27, other possible seal ring configurations could be employed to achieve the same result. The version shown in Figure 28 is substantially the same as that of Figure 27 in that fingers 228, 230 on the seal ring 222 cooperate with pockets 232, 234 in the pipe nipples 224, 226 to effect the interlocking of the nipples. The exception is that the radial flange 222a extends radially inward from the main body of the seal ring in Figure 28 whereas in Figure 27 it extends outward. As will be apparent from the drawing, the sealing surfaces on the opposed ends of the nipples 224, 226 are of double conical configuration similar to that shown in Figures 25 and 26. The interlocking system shown in Figure 29 is substantially the same as that of Figures 27 and 28 wherein fingers on a lock ring 238 cooperate with pockets 246, 248 in the pipe nipples 242, 244. The fluid-tight seal between the pipe nipples is established by inner seal ring 236 in cooperation with the adjacent nipple surfaces. Obviously, the seal ring 236 is separate from the lock ring 238.

Figure 30 illustrates yet another embodiment of the present invention which is substantially the same as that of Figures 12 and 13 with the exception of being the manner by which the seal element 252 is retained within the pipe nipple 254. The upper half of Figure 30 illustrates the position of the components of the connector in its released condition.

-12-

Conversely, the lower half of Figure 30 illustrates the connection in its fully made-up condition. Seal element 252 has an annular groove 260 in its outer surface that cooperates with annular inwardly facing lip(s) 258 on one or more of the fingers 262 on the pipe nipple 254 to removably retain the seal element in the nipple. During installation of the seal element, the fingers 262 flex outwardly to allow the outer surface of the seal element to pass by the lips 258. When the groove 260 reaches the position shown in Figure 30, the fingers contract to their original condition thereby causing the lips 258 to enter and grip the groove 260. The seal element 252 may be readily removed from the nipple 254 by exerting an axial pull on the seal element, thereby causing the fingers 262 to flex outward and release the engagement of their lips 258 with the groove 260.

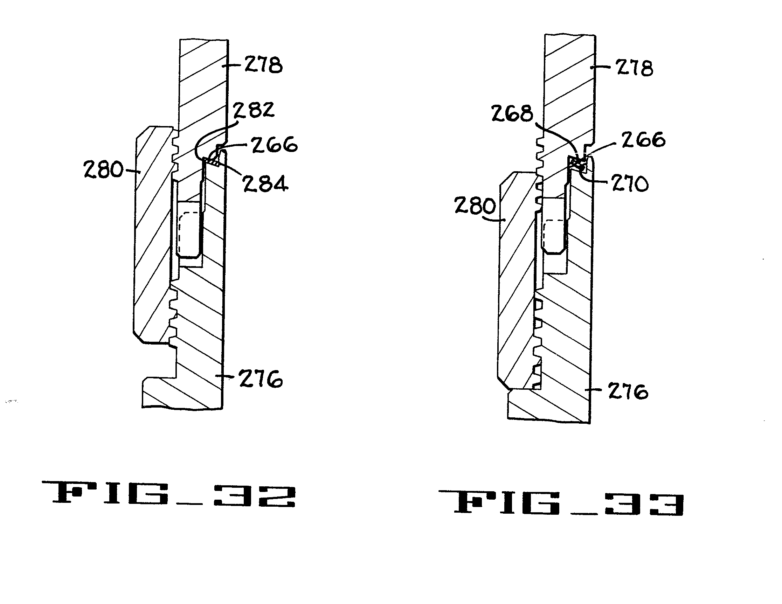

Figures 32 and 33 illustrate another embodiment of the present invention which is substantially the same as Figure 25 with the exception of the sealing system between the pipe nipples. In this embodiment, a belleville washer type seal 266 is engaged such that seal surfaces 282, 284 (Figure 33) cooperate with surfaces 268, 270 on the pipe nipples 278, 276 respectively to establish a fluid-tight seal between these elements as shown in Figure 32. As the nipples 276, 278 are drawn together by rotation of the differentially threaded coupling 280, the seal element 266 is partially flattened from its initial configuration shown in Figure 33 to its final configuration shown in Figure 32. As this flattening occurs the seal elements radial surfaces 282, 284 are forced into fluid-tight contact with the radial surfaces 268, 270 of the nipples.

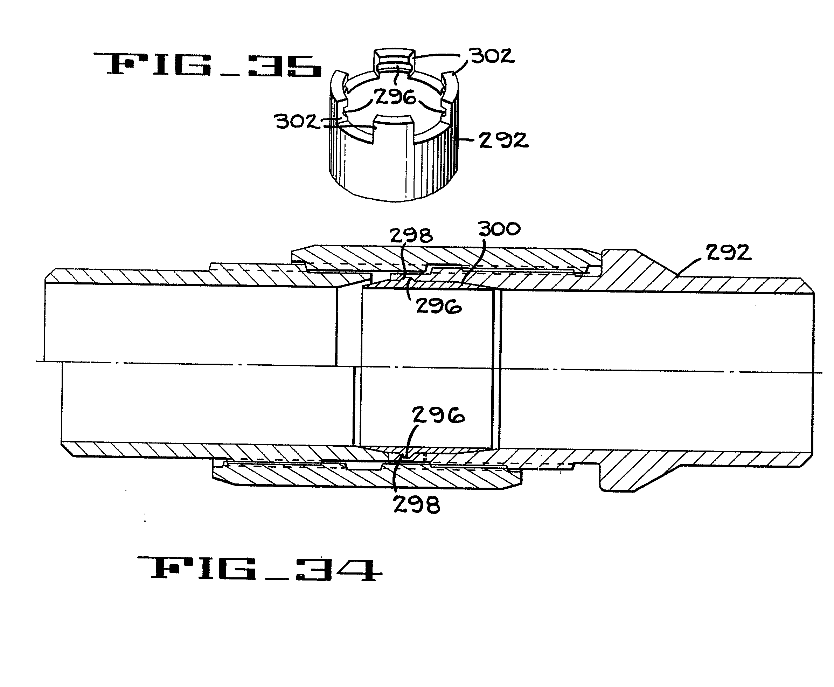

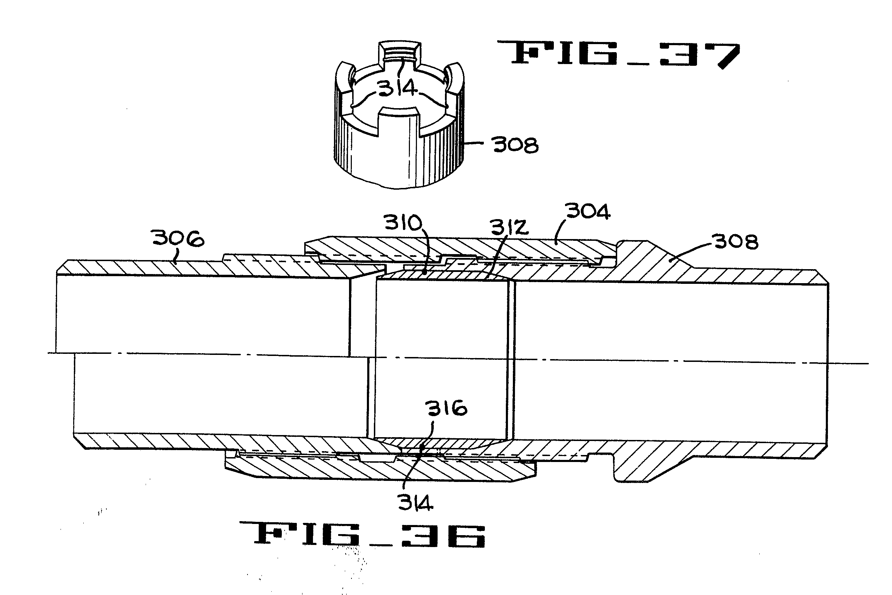

Figures 34 thru 37 illustrate further embodiments of the present invention which are substantially the same as that of Figures 30 and 31, the exception being the manner in which the seal element 300 is retained within the pipe nipple 292. The upper halves of Figures 34 and 36 illustrate the position of the components of the connectors in their released condition. Conversely, the lower halves of these figures illustrate the connectors in their fully made-up condition. Seal element 300 has an annular ridge 298 on its outer surface that cooperates with annular groove(s) 296 on the inner surface of one or more of the fingers 302 of the pipe nipple 292. The annular ridge 298 may be either continuous or interrupted. If the ridge is continuous, the fingers 302 flex outwardly during installation of the seal element to allow the ridge to pass by the leading edge of the fingers until it encounters the groove(s) 296. If the annular ridge 298 is interrupted such that the width of the slot(s) between the fingers 302, the seal element may be inserted axially into the nipple 292 until the ridge segments align with the groove(s) 298 and then rotated to place the ridge segment(s) within the groove(s), thereby releasably retaining the seal element within the nipple. The embodiment shown in Figures 36 and 37 includes a coupling 304, two pipe nipples 306, 380, a seal element 312, and a snap ring 310. The seal retention means, i.e. the snap ring 310 and the cooperating groove 314 and 316, shown in Figures 36 and 37 is identical to that shown in Figures 22 thru 24. Otherwise, the embodiment of Figures 36 and 37 is substantially the same as that of Figures 30 and 31.

Although the best mode contemplated for carrying out the present invention has been herein shown and described, it will be apparent that modifications and variations may be made without departing from what is regarded to be the subject matter of this invention.

1. A thread-type pipe connector for releasably interconnecting two pipe sections in an end-to-end manner, comprising: a sleeve-like pipe coupling, a dual thread system on the coupling for threadedly engaging and drawing together the adjacent ends of a first and a second pipe section, and an anti-rotation system for interlocking the two pipe sections and preventing their relative rotation in either direction.

2. A pipe connector, according to claim 1, including a seal system for establishing a fluid-tight seal between the two pipe sections when in their connected position.

3. A pipe connector, according to claim 2, wherein the seal system includes a metal-to-metal seal.

4. A pipe connector, according to claim 2, wherein the seal system includes a flexible seal element.

5. A pipe connector, according to claim 2, wherein the seal system includes at least one conical sealing surface on one of the pipe sections and a mating annular sealing surface on the other pipe section.

6. A pipe connector, according to claim 2, wherein the seal system includes an annular seal element that is forced into fluid-tight contact with both pipe sections when the coupling is rotated about said sections.

7. A pipe connector, according to claim 6, wherein the seal element includes means for releasably retaining said element with respect to one of said pipe sections during handling thereof.

8. A pipe connector, according to claim 7, wherein the retaining means comprises a helical thread.

9. A pipe connector, according to claim 7, wherein the retaining means comprises a snap ring and mating annular groove.

10. A pipe connector, according to claim 7, wherein the retaining means comprises at least one spring-like finger on one of said pipe sections, a lip on said fingers, and a recess on said seal element for releasably accepting said lip.

11. A pipe connector, according to claim 7, wherein the retaining means comprises at least one spring-like finger on one of said pipe sections, a recess on said finger, and catch means on said seal element in cooperating position with respect to said recess.

12. A pipe connector, according to claim 11, wherein said catch means comprises a segment of an annular ridge.

13. A pipe connector, according to claim 11, wherein said catch means comprises a snap ring.

14. A pipe connector, according to claim 1, wherein the anti-rotation system comprises at least one alignment key on one of the pipe sections, and at least one alignment slot on the other pipe section for cooperating with said key to releasably secure the two pipe sections against relative rotation.

15. A pipe connector, according to claim 1, wherein the anti-rotation system includes at least one stab element on one of the pipe sections and a cooperating receptacle in the other pipe section.

16. A pipe connector, according to claim 15, wherein the stab element comprises a stab seal nipple.

17. A pipe connector, according to claim 1, wherein the anti-rotation system includes at least one finger on one of the pipe sections, and at least one slot on the other pipe section in which the finger resides when the pipe sections are properly connected.

18. A pipe connector, according to claim 17, including a seal element for establishing a fluid-tight seal between the pipe sections, said seal element including at least one lug for cooperation with said slot to secure said seal element in one of said pipe sections and prevent relative rotation therebetween.

19. A pipe connector, according to claim 17, wherein said lug includes a helical thread segment.

20. A pipe connector, according to claim 1, wherein the anti-rotation system comprises a plurality of wedge elements positioned on circumferentially spaced outer surface areas on the pipe sections and means for releasably retaining said wedge elements in position.

21. A pipe connector, according to claim 20, including an annular seal element retained in position in one of the pipe sections by the wedge element.

22. A pipe connector, according to claim 1, wherein the anti-rotation system comprises a plurality of circumferentially spaced pins residing in opposed sockets in the adjacent end faces of the pipe sections when said sections are connected in end-to-end manner.

23. A pipe connector, according to claim 1, wherein the anti-rotation system comprises complementary skew-cut end surfaces on the pipe sections.

24. A pipe connector, according to claim 1, wherein the anti-rotation system comprises a lock ring having at least one finger, and a cooperating pocket on each of the pipe sections in which said finger resides when said pipe sections are interconnected.

25. A pipe connector, according to claim 24, wherein said lock ring includes an annular seal portion for establishing a fluid-tight seal between said pipe sections.

26. A pipe connector, according to claim 1, wherein the anti-rotation system includes at least one finger on one of the pipe sections, and at least one pocket on the other pipe section in which said finger resides when the pipe sections are interconnected.

27. A pipe connector, according to claim 1, including means for axially positioning the second pipe section relative to the first pipe section so that said pipe sections are properly spaced apart at the onset of threaded engagement of the coupling and the second pipe section.

28. A pipe connector, according to claim 27, wherein the positioning means comprises the pipe assembly in a pre-established position on the first pipe section.

29. A pipe connector, according to claim 28, wherein the positioning means further includes indicator means on the first pipe section for positioning the coupling on said first pipe section.

30. A pipe connector, according to claim 28, wherein the positioning means further comprises stop means on the first pipe section to position the coupling on said first pipe section.

31. A pipe connector, according to claim 30, wherein the stop means pre-establishes the position of the pipe coupling on the first pipe section.

32. A pipe connector, according to claim 27, wherein the positioning means comprises first locating means on the first pipe section and second locating means on the second pipe section.

UNCONNECTED
FIG_1

CONNECTED & PRELOADED
FIG_2

FIG_3

UNCONNECTED

P3355EU
0060549

FIG_4
ENGAGED

# FIG_5

CONNECTED & PRELOADED

P3355EU
0060549

# FIG_6

UNDERLINE UNCONNECTED

20  22a  24  22  23  22b  25  21

5/18

0060549

# FIG_7
ENGAGED

20  22a  24  22  23  22b  25  21

# FIG_8
## CONNECTED & PRELOADED

20  24  22a  22  22  23  25  22b  21

FIG_9

EP 0060549

**FIG_10**

**FIG_11**

P 3355 EU
0060549

Γ3355EU
0060549

## FIG_12

## FIG_13

## FIG_14

## FIG_15

P 53 EU
0060549

**FIG_16**

**FIG_17**

P
0060549 EU

FIG_18

FIG_19

FIG_20

FIG_21

P3355 F4
0060549

**FIG_22**

**FIG_24**

168

166
164
182
160
184
176
174

170
172
160
164

178
180

176
174

166

**FIG_23**

160
178
170
166

# FIG_26

# FIG_25

# FIG_27

# FIG_29

# FIG_28

FIG_31

FIG_30

0060549

P
EU
0060549

FIG_32

FIG_33

FIG_35

302

296

302

292

298    300

292

296

296

298

FIG_34

P 33 55 £4
0060549

FIG_37

314

308

304

306    310    312    308

314

316

FIG_36

P335EW 0060549

**European Patent
Office**

**EUROPEAN SEARCH REPORT**

EP 82 10 2095.5

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| A | DE - U - 1 993 754 (STAHL- UND RÖHRENWERK REISHOLZ) <br> * page 2, lines 3 to 8; fig. 1 * <br> -- | 1,2, 5,6 | F 16 L 15/00 |
| A | DE - C - 392 878 (SIEP) <br> * claim 1; fig. 2, 5 * <br> -- | 1,14, 17,20, 26 | |
| A | GB - A - 1 521 133 (BRITISH PETROLEUM) <br> * fig. 1 * <br> -- | 1 | **TECHNICAL FIELDS SEARCHED (Int.Cl. ³)** |
| A | BE - A - 566 321 (KOPONEN) <br> * fig. 1 * <br> -- | 1 | F 16 L 15/00 |
| A | AT - B - 24 861 (TEMPLE et al.) <br> * fig. 1, 2 * <br> ---- | 1 | |

CATEGORY OF
CITED DOCUMENTS

X: particularly relevant if
taken alone
Y: particularly relevant if
combined with another
document of the same
category
A: technological background
O: non-written disclosure
P: intermediate document
T: theory or principle
underlying the invention
E: earlier patent document,
but published on, or after
the filing date
D: document cited in the
application
L: document cited for other
reasons

&: member of the same patent
family,
corresponding document

| | The present search report has been drawn up for all claims | | |
|---|---|---|---|
| Place of search | Date of completion of the search | Examiner | |
| Berlin | 21-05-1982 | SCHLABBACH | |

EPO Form 1503.1  06.78